# EUROPÄISCHE PATENTSCHRIFT

(11) **EP 0 545 885 B1**
(45) Veröffentlichungstag und Bekanntmachung des Hinweises auf die Patenterteilung: **21.12.1994**
(21) Anmeldenummer: 92890246.9
(22) Anmeldetag: 23.11.1992
(51) Int. Cl.: F03B 13/10, E02B 9/06, F03B 13/08

(54) **Wasserkraft Kleinkraftwerk mit Rohrturbine**
Small water power plant using bulb turbine
Petite centrale hydroélectrique utilisant une turbine bulbe

(30) Priorität: 02.12.1991 AT 2391/91
(43) Veröffentlichungstag der Anmeldung: 09.06.1993
(73) Patentinhaber: Andritz-Patentverwaltungs-Gesellschaft m.b.H., 8045 Graz (AT); TAUERNKRAFTWERKE AKTIENGESELLSCHAFT, 5020 Salzburg (AT)
(72) Erfinder: Kriechhammer, Franz, Dipl.-Ing., A-5201 Seekirchen (AT)
(74) Vertreter: Collin, Hans, Dipl.-Ing. Dr.

(56) Entgegenhaltungen:
- DE-A- 891 678
- DE-A- 3 841 344
- US-A- 3 980 894
- US-A- 4 740 711
- PATENT ABSTRACTS OF JAPAN vol. 009, no. 121 (M-382)25. Mai 1985, & JP-60005907 (HITACHI ZOSEN KK) 12. Januar 1985

## Beschreibung

Die Erfindung betrifft ein Verfahren und ein Kleinkraftwerk zur besseren und umweltfreundlichen Ausnutzung von Wasserkraft-Energiequellen, insbesondere Wasserbeileitungen.

Im Gebirge werden einzelne Gewässer einem Speicher oder Stausee zugeführt und anschließend durch Rohrleitungen über eine Turbine geleitet, die einen Generator zur Erzeugung elektrischer Energie antreibt. Bei bestehenden Bachbeileitungen wird das Wasser von zum Teil vom Speicher weit entfernten Gebirgsbächen über weitläufige Stollen durch den Berg geführt und in den Speicher geleitet (z.B. DE-A-3841344). Aufgrund der stark schwankenden Fallhöhe und Wassermenge und besonders wegen der Unzugänglichkeit der Einbaustelle des Maschinensatzes war es nicht möglich, das Potential nur annähernd wirtschaftlich zu nutzen. Bisher mußte dazu ein großer, teurer Transportstollen hergestellt werden, um einen Zugang zu einer Kaverne mit Turbine und Generator zu ermöglichen. Eine Rentabilität für eine derartige Ausführung war daher wegen der hohen Kosten und der relativ geringen Energieausbeute nicht gegeben.

Ziel der Erfindung ist es, diesen Nachteil auszuschalten. Dies wird bei dem eingangs näher bezeichneten Verfahren erfindungsgemäß dadurch erreicht, daß ein Gewässer über eine an sich bekannte Bachfassung einer in einem Berg befindlichen Rohrleitung und einer ausschließlich durch diese Rohrleitung eingebrachten und in dieser Rohrleitung montierten Rohrturbinen-Generator-Einheit zur Erzeugung elektrischer Energie zugeführt wird und daß anschließend das Gewässer der Triebwasserführung eines Kraftwerkes oder einem Speicher oder dem Ab- oder Zulauf einer weiteren Rohrturbinen-Generator-Einheit einer Bachbeileitung zugeführt wird. Dabei wird zweckmäßigerweise die Rohrturbinen-Generator-Einheit in den vorhandenen bzw. zu errichtenden Beileitungsstollen eingebracht und montiert. Besonders zweckmäßig ist es, wenn das Gewässer nach Durchgang durch einen bestehenden Beileitungsstollen einer zumindest weitgehend vertikalen Rohrleitung zugeführt wird, in die die Rohrturbinen-Generator-Einheit eingebracht und montiert wird. Dabei kann das Gewässer im Beileitungsstollen gespeichert werden. Das Gewässer kann weiters, wie an sich bekannt, über dem Absenkziel des Speichers austreten.

Vorteilhafterweise wird der Gegendruck durch die Einbautiefe der Rohrturbinen-Generator-Einheit den Erfordernissen der Turbine angepaßt. Gemäß einer Ausgestaltung des erfindungsgemäßen Verfahrens kann die Rohrturbinen-Generator-Einheit in eine ausschließlich durch die Rohrleitung zugängliche Kaverne eingebracht und dort montiert werden. Es kann aber auch die Rohrturbinen-Generator-Einheit gesamt in die Rohrleitung eingebracht und an der Einbaustelle von der Einbringstelle her montiert bzw. befestigt und abgedichtet werden.

Gemäß einer weiteren Ausgestaltung kann das Gewässer durch mehrere aufeinander folgende Rohrturbinen-Generator-Einheiten geführt werden. Dabei kann es vorteilhaft sein, wenn zwischen dem Durchgang durch die einzelnen Rohrturbinen-Generator-Einheiten mindestens an einer Stelle mehrere Gewässer zusammengeführt werden. Dabei kann das Gewässer zwischen dem Durchgang durch die einzelnen Rohrturbinen-Generator-Einheiten einen Speicherzu- und -abfluß durchfließen.

Gegenstand der Erfindung ist auch ein Kleinkraftwerk zur Durchführung des erfindungsgemäßen Verfahrens, das dadurch gekennzeichnet ist, daß die Rohrturbinen-Generator-Einheit durch eine Rohrleitung an die Einbaustelle einbringbar und dort in der Rohrleitung montierbar ist. Dabei kann die Rohrturbinen-Generator-Einheit in einer ausschließlich durch die Rohrleitung zugänglichen Kaverne montiert sein. Es kann aber auch die Rohrturbinen-Generator-Einheit in einer Rohrleitung mittels von der Einbringstelle zu bedienender spezieller Einrichtungen an der Einbaustelle montierbar sein. Diese speziellen Einrichtungen können vorteilhaft als hydraulisch betätigte Abstützeinrichtungen ausgebildet sein.

Eine Variante des erfindungsgemäßen Kleinkraftwerkes ist dadurch gekennzeichnet, daß der Auslauf der Rohrturbinen-Generator-Einheit über eine Rohrleitung mit einer Triebwasserführung eines Kraftwerkes in Verbindung steht. Gemäß einer anderen Variante kann der Auslauf der Rohrturbinen-Generator-Einheit über eine Rohrleitung mit einem Speicher in Verbindung stehen. Es kann aber auch die Rohrturbinen-Generator-Einheit über eine Rohrleitung mit einer Bachfassung in Verbindung stehen. Weiters kann die Rohrturbinen-Generator-Einheit über eine Rohrleitung mit einem Bachbeileitungsstollen in Verbindung stehen. Eine besonders zweckmäßige Weiterbildung ist dadurch gekennzeichnet, daß der Auslauf einer Rohrturbinen-Generator-Einheit mit dem Auslauf mindestens einer weiteren Rohrturbinen-Generator-Einheit über Rohrleitungen in Verbindung steht. Dabei kann der Auslauf mindestens einer Rohrturbinen-Generator-Einheit mit dem Einlauf mindestens einer weiteren Rohrturbinen-Generator-Einheit über Rohrleitungen in Verbindung stehen. Weiters kann zwischen dem Auslauf mindestens einer Rohrturbinen-Generator-Einheit und dem Einlauf mindestens einer weiteren Rohrturbinen-Generator-Einheit ein Speicher zwischengeschaltet sein.

Durch ein derartiges Verfahren bzw. ein derartiges Kleinkraftwerk wird es erstmalig ermöglicht, den Energieinhalt der Bachbeileitungen für die Stromerzeugung wirtschaftlich zu nutzen.

Die Erfindung wird nun anhand von Zeichnungen beispielhaft erläutert, wobei Fig. 1 den Einbau einer Rohrturbinen-Generator-Einheit in einer Kaverne vor einer Triebwasserführung, Fig. 2 eine Variante der Erfindung mit Einbau der Rohrturbinen-Generator-Einheit vor einem Speicher oder Stausee und Fig. 3 den Einbau einer Rohrturbinen-Generator-Einheit ohne Kaverne darstellt.

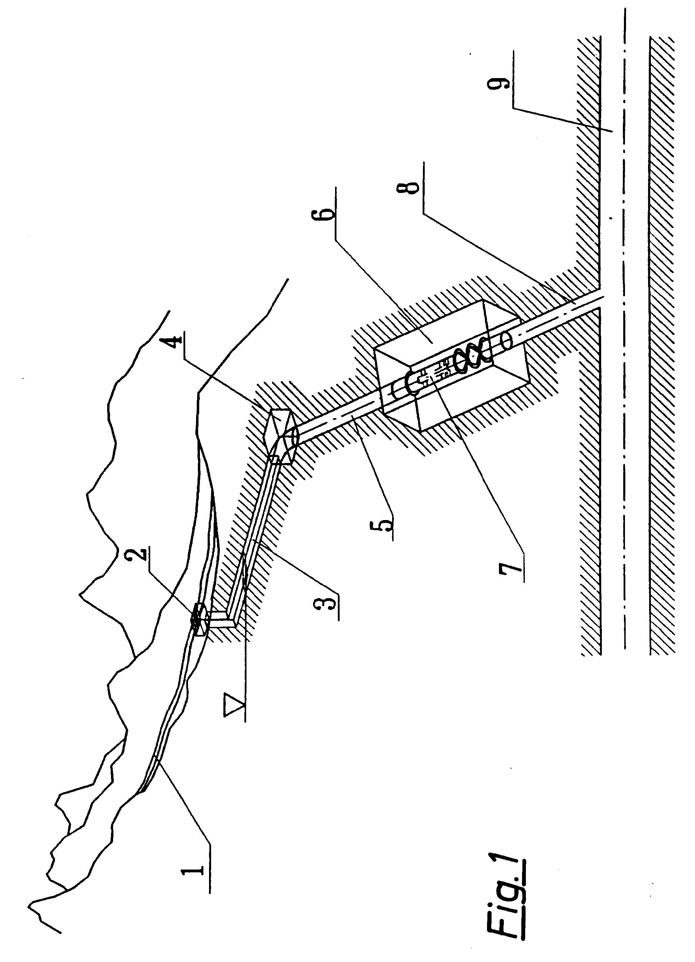

In Fig. 1 ist die Anordnung einer Rohrturbinen-Generator-Einheit in einer Bachbeileitung der Triebwasserführung eines Kraftwerkes dargestellt. Der Gebirgsbach 1 wird hiebei in einer Bachfassung 2 in einen Beileitungsstollen 3 geführt. Von der anschließenden Windenkammer 4 führt eine Rohrleitung 5,8 z.B. zur Triebwasserführung 9 eines (nicht dargestellten) Kraftwerkes. In diese bestehende Rohrleitung wird nun von innen heraus eine Kaverne 6 ausgebrochen. Der Zugang kann dabei nur über den Beileitungsstollen 3, die Windenkammer 4 und das Einlaufrohr 5 erfolgen. Die benötigten Werkzeuge werden dabei in der Windenkammer 4 bereitgestellt. Das Ausbruchmaterial wird dann durch das Einlaufrohr 5 oder das Auslaufrohr 8 weggeführt. Nach Fertigstellung der Kaverne 6 wird die Rohrturbinen-Generator-Einheit 7, vorzugsweise in mehreren Einzelteilen, durch den Beileitungsstollen 3, die Windenkammer 4 und das Einlaufrohr 5 in die Kaverne 6 eingebracht und dort montiert. Nach erfolgter Montage wird der Ausstieg (Mannloch) aus dem Einlaufrohr 5 von innen verschlossen und abgedichtet. Das Montagepersonal verläßt die Kaverne 6 wieder über das Einlaufrohr 5. Anschließend werden der Beileitungsstollen 3, Bereiche der Windenkammer 4 und das Einlaufrohr 5 geflutet. Je nach Wasseranfall wird die Rohrturbinen-Generator-Einheit 7 in Betrieb gesetzt. Die Regelung kann dabei durch eine Minimum-Maximum-Wasserstandsanzeige des Rohrleitungssystems Beileitungsstollen 3, Windenkammer 4 und Einlaufrohr 5 erfolgen. Das Wasser verläßt die Rohrturbinen-Generator- Einheit 7 durch das Auslaufrohr 8 und wird anschließend einer Triebwasserführung 9 zugeleitet.

Durch eine derartige Anordnung wird es erstmals ermöglicht, den Energieinhalt bestehender Bachbeileitungen für die Stromerzeugung wirtschaftlich zu nutzen. Ein spezieller Vorteil dieser Anordnung besteht darin, daß die Montage der Rohrturbinen-Generator-Einheit praktisch an jeder beliebigen Stelle in einer bestehenden Rohrleitung entsprechend den Anforderungen erfolgen kann.

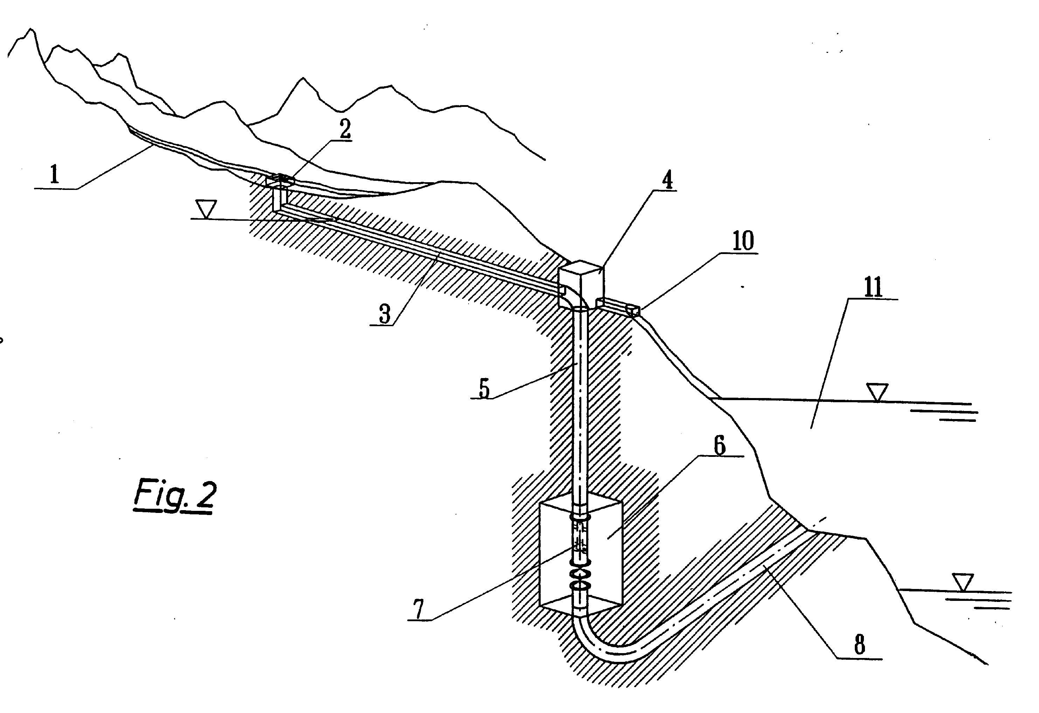

Fig. 2 stellt eine Variante der Erfindung dar, wobei das Gewässer nach Durchgang durch die Rohrturbinen-Generator-Einheit 7 über ein Auslaufrohr 8 einem Speicher 11, z.B. einem Stausee, zugeführt wird. Hier ist die Windenkammer 4 von außen zugänglich, wodurch sich die Einbringung der Rohrturbinen-Generator-Einheit 7 sowie der benötigten Werk- und Hebezeuge beträchtlich vereinfacht. Das Überschußwasser aus dem Beileitungsstollen 3 wird über eine Rohrleitung 10 direkt dem Speicher 11 zugeführt. Dies gilt auch für das Gesamtwasser der Bachbeileitung bei Montage- bzw. Revisionsarbeiten. Das Einlaufrohr 5 verläuft hier zumindest weitestgehend vertikal. Ein besonderer Vorteil dieser Anordnung besteht darin, daß die Rohrleitung bzw. die Einbautiefe der Rohrturbinen-Generator-Einheit 7 besonders gut an die hydraulischen Anforderungen der Turbine angepaßt werden kann. Speziell der Gegendruck läßt sich dadurch leicht anpassen. Das Wasser wird aus dem Auslaufrohr 8 über dem Absenkziel des Speichers 11 in diesen geleitet. Dadurch ist die Herstellung der Rohrleitung bzw. sind Revisionen am Auslaufrohr 8 während des niedrigsten Standes (Absenkziel) des Speichers 11 besonders einfach möglich.

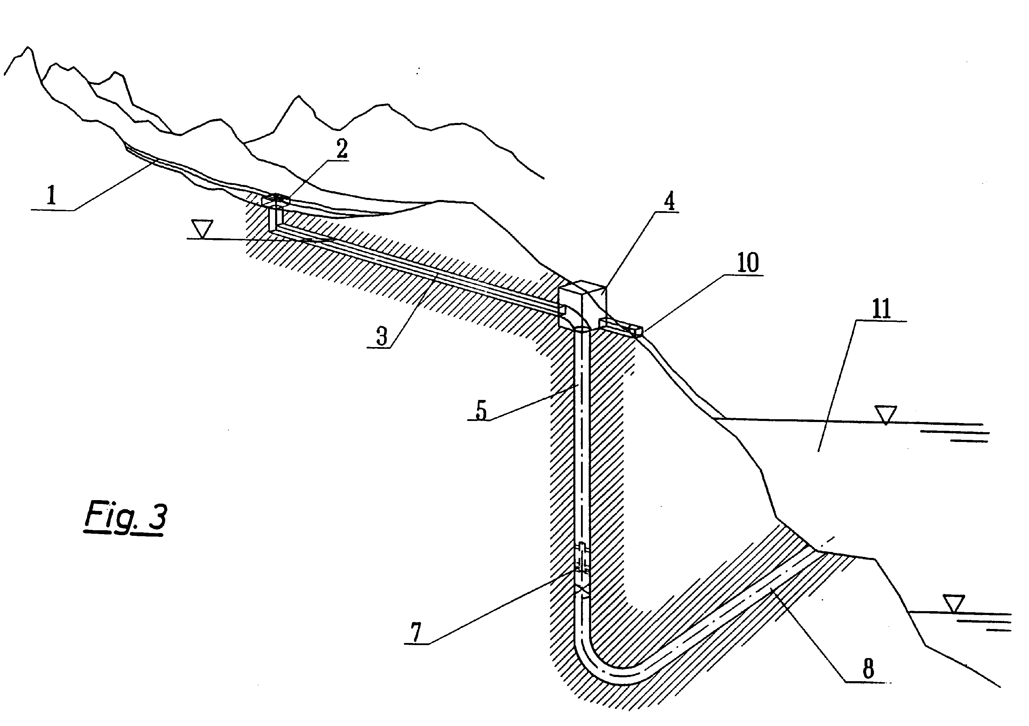

Eine Variante zur Ausführung gemäß Fig. 2 ist in Fig. 3 dargestellt. Bei leistungsmäßig und dadurch auch von den Abmaßen her kleineren Anlagen läßt sich die Rohrturbinen-Generator-Einheit 7 direkt in die Rohrleitung 5 einbringen und dort montieren. Dies kann über hydraulisch betätigte Abstützvorrichtungen erfolgen, die z.B. von der Windenkammer 4 aus betätigt werden. Bei dieser Variante entfällt der kostspielige Ausbruch einer Kaverne 6, wie sie bei der Variante gemäß Fig. 2 benötigt wird.

Durch eine spezielle Konstruktion der Rohrturbinen-Generator-Einheit 7 und der erfindungsgemäßen Anordnung der Anlage im Berg können die Baukosten eines derartigen Kraftwerkes so weit gesenkt werden, daß die energetische Nutzung der Bachbeileitungen wirtschaftlich rentabel durchgeführt werden kann. Weiters werden durch die Speicherung des Gewässers im Rohrleitungssystem vor der Rohrturbinen-Generator-Einheit das Problem und die damit verbundenen Gefahren des Luftmitreißens ausgeschaltet, wodurch auch die kostspieligen und oft schlecht funktionierenden Luftabscheider entfallen können.

## Patentansprüche

1. Verfahren zur besseren und umweltfreundlichen Ausnutzung von Wasserkraft-Energiequellen, insbesonders Wasserbeileitungen, dadurch gekennzeichnet, daß ein Gewässer über eine an sich bekannte Bachfassung einer in einem Berg befindlichen Rohrleitung und einer ausschließlich durch diese Rohrleitung eingebrachten und in dieser Rohrleitung montierten Rohrturbinen-Generator-Einheit zur Erzeugung elektrischer Energie zugeführt wird, und daß anschließend das Gewässer der Triebwasserführung eines Kraftwerkes oder einem Speicher oder dem Ab- oder Zulauf einer weiteren Rohrturbinen-Generator-Einheit einer Bachbeileitung zugeführt wird.

2. Verfahren nach Anspruch 1, dadurch gekennzeichnet, daß die Rohrturbinen-Generator-Einheit in den vorhandenen bzw. zu errichtenden Beileitungsstollen eingebracht und montiert wird.

3. Verfahren nach Anspruch 1, dadurch gekennzeichnet, daß das Gewässer nach Durchgang durch einen bestehenden Beileitungsstollen einer zumindest weitgehend vertikalen Rohrleitung zugeführt wird, in die die Rohrturbinen-Generator-Einheit eingebracht und montiert wird.

4. Verfahren nach Anspruch 3, dadurch gekennzeichnet, daß das Gewässer im Beileitungsstollen gespeichert wird.

5. Verfahren nach einem der Ansprüche 1 bis 4, dadurch gekennzeichnet, daß das Gewässer wie an sich bekannt über dem Absenkziel des Speichers austritt.

6. Verfahren nach einem der Ansprüche 3 bis 5, dadurch gekennzeichnet, daß der Gegendruck durch die Einbautiefe der Rohrturbinen-Generator-Einheit den Erfordernissen der Turbine angepaßt wird.

7. Verfahren nach einem der Ansprüche 1 bis 6, dadurch gekennzeichnet, daß die Rohrturbinen-Generator-Einheit in eine ausschließlich durch die Rohrleitung zugängliche Kaverne eingebracht und dort montiert wird.

8. Verfahren nach einem der Ansprüche 1 bis 6, dadurch gekennzeichnet, daß die Rohrturbinen-Generator-Einheit gesamt in die Rohrleitung eingebracht und an der Einbaustelle von der Einbringstelle her montiert bzw. befestigt und abgedichtet wird.

9. Verfahren nach einem der Ansprüche 1 bis 8, dadurch gekennzeichnet, daß das Gewässer durch mehrere aufeinander folgende Rohrturbinen-Generator-Einheiten geführt wird.

10. Verfahren nach Anspruch 9, dadurch gekennzeichnet, daß zwischen dem Durchgang durch die einzelnen Rohrturbinen-Generator-Einheiten mindestens an einer Stelle mehrere Gewässer zusammengeführt werden.

11. Verfahren nach Anspruch 9 oder 10, dadurch gekennzeichnet, daß das Gewässer zwischen dem Durchgang durch die einzelnen Rohrturbinen-Generator-Einheiten einen Speicherzu- und -abfluß durchfließt.

12. Kleinkraftwerk zur Durchführung des Verfahrens nach einem der Ansprüche 1 bis 11, dadurch gekennzeichnet, daß die Rohrturbinen-Generator-Einheit (7) durch eine Rohrleitung (3;5) an die Einbaustelle einbringbar und dort in der Rohrleitung (5) montierbar ist.

13. Kleinkraftwerk nach Anspruch 12, dadurch gekennzeichnet, daß die Rohrturbinen-Generator-Einheit (7) in einer ausschließlich durch die Rohrleitung (3,5) zugänglichen Kaverne (6) montiert ist.

14. Kleinkraftwerk nach Anspruch 12, dadurch gekennzeichnet, daß die Rohrturbinen-Generator-Einheit (7) in einer Rohrleitung (5) mittels von der Einbringstelle (4) zu bedienender spezieller Einrichtungen an der Einbaustelle montierbar ist.

15. Kleinkraftwerk nach Anspruch 14, dadurch gekennzeichnet, daß die speziellen Einrichtungen als hydraulisch betätigte Abstützeinrichtungen ausgebildet sind.

16. Kleinkraftwerk nach einem der Ansprüche 12 bis 15, dadurch gekennzeichnet, daß der Auslauf der Rohrturbinen-Generator-Einheit (7) über eine Rohrleitung (8) mit einer Triebwasserführung (9) eines Kraftwerkes in Verbindung steht.

17. Kleinkraftwerk nach einem der Ansprüche 12 bis 15, dadurch gekennzeichnet, daß der Auslauf der Rohrturbinen-Generator-Einheit (7) über eine Rohrleitung (8) mit einem Speicher (11) in Verbindung steht.

18. Kleinkraftwerk nach einem der Ansprüche 12 bis 17, dadurch gekennzeichnet, daß die Rohrturbinen-Generator-Einheit (7) über eine Rohrleitung mit einer Bachfassung in Verbindung steht.

19. Kleinkraftwerk nach einem der Ansprüche 12 bis 17, dadurch gekennzeichnet, daß die Rohrturbinen-Generator-Einheit (7) über eine Rohrleitung mit einem Bachbeileitungsstollen in Verbindung steht.

20. Kleinkraftwerk nach einem der Ansprüche 12 bis 19, dadurch gekennzeichnet, daß der Auslauf einer Rohrturbinen-Generator-Einheit (7) mit dem Auslauf mindestens einer weiteren Rohrturbinen-Generator-Einheit über Rohrleitungen in Verbindung steht.

21. Kleinkraftwerk nach einem der Ansprüche 12 bis 20, dadurch gekennzeichnet, daß der Auslauf mindestens einer Rohrturbinen-Generator-Einheit (7) mit dem Einlauf mindestens einer weiteren Rohrturbinen-Generator-Einheit über Rohrleitungen in Verbindung steht.

22. Kleinkraftwerk nach Anspruch 21, dadurch gekennzeichnet, daß zwischen dem Auslauf mindestens einer Rohrturbinen-Generator-Einheit (7) und dem Einlauf mindestens einer weiteren Rohrturbinen-Generator-Einheit ein Speicher zwischengeschaltet ist.

## Claims

1. A process for an improved and ecologically beneficial utilization of hydrodynamic power-energy sources, in particular supplementary water conduits, characterized in that water is supplied via a brook curb known per se to a pipeline disposed in a mountain and to a bulb turbine-generator-unit introduced exclusively by, and mounted within, this pipeline for the generation of electrical energy, and that subsequently the water is fed to the working water conduit of a power plant or to a reservoir or to the discharge or supply of a further bulb turbine-generator-unit of a supplementary brook water conduit.

2. A process according to claim 1, wherein the bulb turbine-generator unit is introduced and mounted in the existing supplementary conduit gallery or that to be built.

3. A process according to claim 1, wherein the water, after passage through an existing supplementary conduit gallery, is supplied to an essentially vertical pipeline in which the bulb turbine-generator unit is introduced and mounted.

4. A process according to claim 3, wherein the water is stored in the supplementary conduit gallery.

5. A process according to any one of claims 1 to 4, wherein the water flows out as known per se above the sinking objective of the reservoir.

6. A process according to any one of claims 3 to 5, wherein the counter pressure is adapted to the requirements of the turbine by the installation depth of the bulb turbine-generator unit.

7. A process according to any one of claims 1 to 6, wherein the bulb turbine-generator unit is introduced into a cavern exclusively accessible by the pipeline and mounted therein.

8. A process according to any one of claims 1 to 6, wherein the entire bulb turbine-generator-unit is introduced into the pipeline and mounted or attached and sealed at the point of installation from the point of introduction.

9. A process according to any one of claims 1 to 8, wherein the water is guided through a number of sequential bulb turbine-generator units.

10. A process according to claim 9, wherein in the passage through the individual bulb turbine-generator units several waters are brought together at least at one location.

11. A process according to claim 9 or 10, wherein the water flows through a reservoir supply and discharge in the passage through the individual bulb turbine-generator units.

12. Small power plant for carrying out the process according to any one of claims 1 to 11, wherein the bulb turbine-generator unit (7) can be introduced at the point of installation through a pipeline (3;5) and mounted at that point in the pipeline (5).

13. Small power plant according to claim 12, wherein the bulb turbine-generator unit (7) is mounted in a cavern (6) exclusively accessible by the pipeline (3,5).

14. Small power plant according to claim 12, wherein the bulb turbine-generator unit (7) can be mounted in a pipeline (5) at the point of installation by using special means to be operated from the point of introduction (4).

15. Small power plant according to claim 14, wherein the special means are designed as hydraulically operated support means.

16. Small power plant according to any one of claims 12 to 15, wherein the outlet of the bulb turbine-generator unit (7) is linked with the working water conduit (9) of a power plant by means of a pipeline (8).

17. Small power plant according to any one of claims 12 to 15, wherein the outlet of the bulb turbine-generator unit (7) is linked with a reservoir (11) by means of a pipeline (8).

18. Small power plant according to any one of claims 12 to 17, wherein the bulb turbine-generator unit (7) is linked with a brook curb by means of a pipeline.

19. Small power plant according to any one of claims 12 to 17, wherein the bulb turbine-generator unit (7) is linked with a brook supplementary conduit gallery by means of a pipeline.

20. Small power plant according to any one of claims 12 to 19, wherein the outlet of one bulb turbine-generator unit is linked with the outlet of at least one further bulb turbine-generator unit by means of pipelines.

21. Small power plant according to any one of claims 12 to 20, wherein the outlet of at least one bulb turbine-generator unit (7) is linked with the inlet of at least one further bulb turbine-generator unit by means of pipelines.

22. Small power plant according to claim 21, wherein a reservoir is disposed between the outlet of at least one bulb turbine-generator unit (7) and the inlet of at least one further bulb turbine-generator unit.

## Revendications

1. Procédé destiné à une utilisation meilleure et écophile des sources d'énergie de force hydraulique, en particulier des conduites supplémentaires d'eau, caracterisé en ce que l'eau est alimentée à travers un captage de ruisseau connu en soi à une conduite située au sein d'une montagne et à une unité comprenant une turbine bulbe et un générateur introduite uniquement à travers cette conduite et montée au sein de celle-ci pour génération de l'énergie électrique, et qu 'après l'eau est alimentée à une conduite d'eaux motrices d'une centrale de force motrice/ hydroélectrique ou à un réservoir ou à la décharge ou l'amenée d'une autre unité comprenant une turbine bulbe et un générateur d'une conduite supplémentaire d'eau d'un ruisseau.

2. Procédé selon la revendication 1, caracterisé en ce que l'unité comprenant une turbine bulbe et un générateur est introduite et montée dans la galerie de conduite supplémentaire existante ou à construire.

3. Procédé selon la revendication 1, caracterisé en ce que l'eau, après le passage à travers une galerie de conduite supplémentaire existante, est alimentée à une conduite au moins essentiellement verticale, dans laquelle l'unité comprenant une turbine bulbe et un générateur est introduite et montée.

4. Procédé selon la revendication 3, caracterisé en ce que l'eau est accumulée dans la galerie de conduite supplémentaire.

5. Procédé selon une des revendications 1 à 4, caractérisé en ce que l'eau sort au dessus de la descente objective du reservoir d'une manière connue en soi.

6. Procédé selon une des revendications 3 à 5, caracterisé en ce que la contre-pression est adaptée aux conditions de la turbine par la profondeur d'installation de l'unité comprenant une turbine bulbe et un générateur.

7. Procédé selon une des revendications 1 à 6, caracterisé en ce que l'unité comprenant une turbine bulbe et un générateur est introduite dans une caverne accessible uniquement par la conduite est montée au sein de celle-ci.

8. Procédé selon une des revendications 1 à 6, caracterisé en ce que l'unité entière comprenant une turbine bulbe et un générateur est introduite dans la conduite et montée ou attachée et étanchée à l'endroit d'installation à partir de l'endroit d'introduction.

9. Procédé selon une des revendications 1 à 8, caracterisé en ce que l'eau est conduite à travers plusieurs unités successives comprenant une turbine bulbe et un générateur.

10. Procédé selon la revendication 9, caracterisé en ce que, dans le passage à travers les différentes unités comprenant une turbine bulbe et un générateur, plusieurs cours d 'eau confluent au moins à un endroit.

11. Procédé selon la revendication 9 ou 10, caracterisé en ce que dans le passage à travers les différentes unités comprenant une turbine bulbe et un générateur l'eau traverse une amenée et une décharge de réservoir.

12. Petite centrale de force motrice/ hydroélectrique pour effectuer le procédé selon une des revendications 1 à 11, caracterisée en ce que l'unité (7) comprenant une turbine bulbe et un générateur peut être introduite à travers une conduite (3;5) à l'endroit d'installation et y montée au sein de la conduite (5).

13. Petite centrale de force motrice/hydroélectrique selon la revendication 12, caracterisée en ce que l'unité (7) comprenant une turbine bulbe et un générateur est montée au sein d'une caverne (6) accessible uniquement par la conduite (3,5).

14. Petite centrale de force motrice/hydroélectrique selon la revendication 12, caracterisée en ce que l'unité (7) comprenant une turbine bulbe et un générateur peut être montée à l'endroit d'installation dans une conduite (5) au moyen de dispositifs spéciaux à actionner à partir de l'endroit d'introduction.

15. Petite centrale de force motrice/hydroélectrique selon la revendication 14, caracterisée en ce que les dispositifs spéciaux sont formés comme dispositifs de support à actionner d'une manière hydraulique.

16. Petite centrale de force motrice/hydroélectrique selon une des revendications 12 à 15, caracterisée en ce que la sortie de l'unité (7) comprenant une turbine bulbe et un générateur est liée à une conduite d'amenée (9) d'une centrale de force motrice par une conduite (8).

17. Petite centrale de force motrice/hydroélectrique selon une des revendications 12 à 15, caracterisée en ce que la sortie de l'unité (7) comprenant une turbine bulbe et un générateur est liée à un réservoir (11) par une conduite (8).

18. Petite centrale de force motrice/hydroélectrique selon une des revendications 12 à 17, caracterisée en ce que l'unité (7) comprenant une turbine bulbe et un générateur est liée à un captage de ruisseau par une conduite.

19. Petite centrale de force motrice/hydroélectrique selon une des revendications 12 à 17, caracterisée en ce que l'unité (7) comprenant une turbine bulbe et un générateur est liée à une galerie de conduite supplémentaire de ruisseau par une conduite.

20. Petite centrale de force motrice/hydroélectrique selon une des revendications 12 à 19, caracterisée en ce que la sortie d'une unité (7) comprenant une turbine bulbe et un générateur est liée à la sortie au moins d'une autre unité comprenant une turbine bulbe et un générateur par des conduites.

21. Petite centrale de force motrice/hydroélectrique selon une des revendications 12 à 20, caracterisée en ce que la sortie au moins d'une unité (7) comprenant une turbine bulbe et un générateur est liée à l'entrée au moins d'une autre unité comprenant une turbine bulbe et un générateur par des conduites.

22. Petite centrale de force motrice/hydroélectrique selon la revendication 21, caracterisée en ce qu'un réservoir est disposé entre la sortie d'une unité (7) comprenant une turbine bulbe et un générateur et l'entrée au moins d'une autre unité comprenant une turbine bulbe et un générateur.
